# FASCICULE DE BREVET EUROPEEN

(11) **EP 0 756 364 B1**
(45) Date de publication et mention de la délivrance du brevet: **26.04.2000**
(21) Numéro de dépôt: 96401596.0
(22) Date de dépôt: 18.07.1996
(51) Int. Cl.: H02B 1/052

(54) **Rail de support pour des modules de raccordement électrique, et module de raccordement électrique pour fixation par encliquetage sur un tel rail de support**
Tragschiene für elektrische Verbindungsmodul und ein elektrischer Verbindungsmodule zur Schnappbefestigung an eine solche Tragschiene
Mounting rail for electric connection modules, and an electric connection module for snap-mounting on such a mounting rail

(30) Priorité: 24.07.1995 FR 9508954
(43) Date de publication de la demande: 29.01.1997
(73) Titulaire: Air LB International S.A., Luxembourg (FR)
(72) Inventeur: Blanchet, Lucien, 78110 Le Vesinet (FR)
(74) Mandataire: Casalonga, Axel

(56) Documents cités:
- DE-A- 2 014 182
- DE-A- 2 736 079
- FR-A- 2 479 581
- FR-A- 2 657 469
- US-A- 3 160 280

## Description

La présente invention se rapporte à un rail de support en U pour des modules de raccordement électrique, ainsi qu'à un module de raccordement électrique pouvant être fixé par encliquetage sur un tel rail de support.

Un rail de support en U pour la fixation par encliquetage de modules de raccordement électrique, et un module pouvant être fixé par encliquetage sur un tel rail, sont connus par exemple par le document DE-A-27 36 079 et le document correspondant FR-A-2 441 932. Suivant ces documents, le rail de support en U présente une première aile ou aile antérieure et une seconde aile ou aile postérieure ayant chacune un rebord interne. Le module de forme générale parallélépipédique présente sur une première face ou face antérieure une rainure coopérant avec le rebord de l'aile antérieure du rail et sur une seconde face ou face postérieure un bossage ainsi qu'une rainure coopérant avec le rebord de l'aile postérieure du rail. Pour permettre l'immobilisation de plusieurs modules sur un rail de support, des éléments élastiques sous la forme d'un peigne de lames-ressorts sont rapportés dans le rail de support, ces moyens élastiques prenant appui sur le fond du rail et sur l'aile postérieure du rail pour agir, lorsqu'un module est monté dans le rail, sur le fond du module et sur la face postérieure du module et pousser ce dernier élastiquement contre les rebords des deux ailes du U ainsi qu'en direction de l'aile antérieure du rail, pour assurer le maintien du module sur le rail.

Les rails de support et les modules de raccordement selon ces documents ont fait leurs preuves dans la pratique. Toutefois, les éléments élastiques nécessaires pour assurer le maintien des modules sur le rail augmentent le coût de l'ensemble, du point de vue fabrication et stockage, et compliquent le montage. De plus, le rail de support doit être relativement haut pour pouvoir recevoir les éléments élastiques rapportés. Le rail de support et les éléments élastiques rapportés sont métalliques, ce qui n'est pas sans poser des problèmes de couple électrolytique. Le rail métallique présente par ailleurs une masse relativement importante et est d'un coût de fabrication élevé.

Les documents US-A-4 032 209, US-A-2 547 274, FR-A-2 123 6212 ET DE-A-20 14 182 révèlent également des modes de fixation de modules de raccordement sur des rails de support faisant appel à des éléments élastiques rapportés sur les rails.

Le document DE-A-716 622 propose la fixation de modules de raccordement sur un rail de support avec utilisation de ressorts incorporés aux modules en vue de permettre l'encliquetage.

Suivant le document DE-A-17 07 296, des modules de raccordement sont fixés sur un rail de support par déformation élastique du corps du module, ce qui implique que ce corps soit constitué par une matière relativement souple, d'où un maintien peu fiable.

Les mêmes inconvénient se retrouvent sur le module suivant le document DE-B-16 15 600, qui doit également présenter un corps en un matériau relativement souple.

D'autres inconvénients de certains des modules de raccordement et rails de support connus concernent le volume et la masse relativement importants que les modules doivent présenter pour pouvoir coopérer avec le rail de support.

De plus, on connaît par le document FR-A-2 657 469 une barrette de raccordement électrique comprenant un rail de rapport en U recevant par encliquetage des modules qui, auparavant, étaient mis en place et démontés par pivotement d'un quart de tour. Dans l'unique mode de réalisation décrit et représenté, les deux ailes du rail réalisé en une matière souple telle qu'une matière plastique sont subdivisées en tronçons présentant chacun un rebord intérieur de retenue en arc de cercle concave adapté à la forme des talons d'accrochage en arc de cercle convexe prévus sur deux côtés opposés des modules. Cela nécessite l'utilisation de plaques intercalaires placées dans les fentes entre les tronçons des ailes pour positionner et immobiliser les modules dans le sens de la longueur du rail de support.

Enfin, un inconvénient commun à tous les modules de raccordement connus consiste dans le fait qu'ils ne peuvent être montés que sur des rails de support d'un seul type.

La présente invention vise un rail de support de masse réduite et de hauteur réduite dont l'utilisation ne pose pas de problèmes de couple électrolytique et qui puisse recevoir, sans utilisation d'éléments élastiques rapportés, des modules de raccordement électrique fixés par simple encliquetage en étant parfaitement positionnés par rapport au rail. L'invention vise également un module de raccordement électrique qui puisse être fixé par encliquetage indifféremment sur le rail de support conforme à l'invention et sur un rail de support selon les documents DE-A-27 36 079 ET FR-A-2 441 932.

Le rail de support objet de la présente invention est un rail de support en U pour la fixation par encliquetage de modules de raccordement électrique de forme générale parallélépipédique, ce rail comprenant sur ses deux ailes de moyens de retenue susceptibles de coopérer avec des moyens d'accrochage prévus sur deux côtés opposés des modules. Selon l'invention, le rail de support est réalisé en matière thermoplastique. L'une de ses deux ailes est subdivisée en tronçons d'aile élémentaires séparés correspondant chacun à un module et comportant chacun sur sa face interne une nervure subdivisée par une échancrure médiane en deux tronçons de nervure espacés pour coopérer avec deux tronçons de rainure séparés par un bossage médian sur un côté du module. L'autre aile du rail comporte, pour chaque module, une fenêtre destinée à recevoir une nervure d'accrochage prévue en position médiane sur l'autre côté du module.

La réalisation du rail de support en matière thermoplastique, donc en une matière isolante, élimine tous les problèmes de couple électrolytique qui peuvent se poser lors de l'utilisation de rails métalliques. La fixation par encliquetage fait appel uniquement à l'élasticité en flexion de l'une des ailes du rail, sans l'utilisation d'éléments élastiques rapportés qui nécessitent généralement une augmentation de hauteur à la fois du rail et de l'ensemble rail et modules. Cette diminution de hauteur du rail permet de réduire la masse et également le coût du rail. La subdivision de l'une des ailes procure à chaque tronçon d'aile une élasticité accrue et rend par ailleurs les tronçons d'aile indépendants les uns des autres, ce qui permet notamment de démonter chaque un module sans difficulté et sans aucune répercution sur le maintien des modules voisins. La prévision, sur chaque tronçon d'aile, d'une nervure subdivisée par une échancrure médiane en deux tronçons de nervure espacés susceptible de coopérer avec deux tronçons de rainure séparés par un bossage médian sur le module assure à chaque module, sur ladite aile du rail, un positionnement également dans la direction longitudinale du rail, sans utilisation d'aucun moyen rapporté. L'autre aile du rail de support, qui peut être rigide et de très faible hauteur et comporte une rangée de fenêtres dont chacune est destinée à recevoir une nervure d'accrochage prévue sur le module, permet également un positionnement du module sur ladite autre aile du rail dans la direction longitudinale de ce dernier, sans utilisation d'aucun moyen rapporté.

De préférence, le rail de support peut être constitué par une matière thermoplastique chargée de fibres. Le choix de la matière thermoplastique utilisée dépend en particulier des températures auxquelles l'ensemble rail et modules de raccordement doit pouvoir fonctionner.

Le module de raccordement électrique susceptible d'être fixé par encliquetage sur un tel rail de support est un module de forme générale parallélépipédique, ayant deux côtés opposés, l'un antérieur, l'autre postérieur. Sur le côté antérieur, le module présente une rainure d'accrochage munie d'un bossage médian, cette rainure étant destinée à coopérer avec la nervure de retenue prévue sur chaque tronçon d'aile antérieure du rail, le bossage de la rainure pénétrant dans l'échancrure médiane prévue dans ladite nervure. Sur le côté postérieur, le module comporte une nervure d'accrochage médiane susceptible de coopérer avec l'une des fenêtres prévues dans l'aile postérieure du rail. Pour permettre à ce module d'être fixé également par encliquetage sur un rail de support suivant le document DE-A-27 36 079 et FR-A-2 441 932, il comporte en outre, sur son côté postérieur, un bossage avec console susceptible de coopérer, d'une part avec le rebord interne de l'aile postérieure de ce rail et d'autre part avec les deux branches que comportent, sur ce côté, les lames-ressort équipant ce rail de support connu.

Un tel module peut donc être monté indifféremment sur un rail de support suivant la présente invention et sur un rail de support connu par les documents antérieurs précités.

En ce référant aux dessins annexés, on va décrire ci-après plus en détail un mode de réalisation illustratif et non limitatif d'un rail de support conforme à l'invention et d'un module de raccordement électrique susceptible d'être fixé sur ce rail et sur un rail connu ; sur les dessins :
- la figure 1 est une vue en perspective d'un tronçon de rail conforme à l'invention et d'un module, prise depuis le côté postérieur ;
- la figure 2 est une vue en perspective du rail et du module de la figure 1, prise depuis le côté antérieur ;
- la figure 3 est une vue latérale d'un module conforme à l'invention monté sur un rail de support conforme à l'invention ;
- la figure 4 est une vue latérale d'un module conforme à l'invention monté sur un rail de support relevant de l'état de la technique.

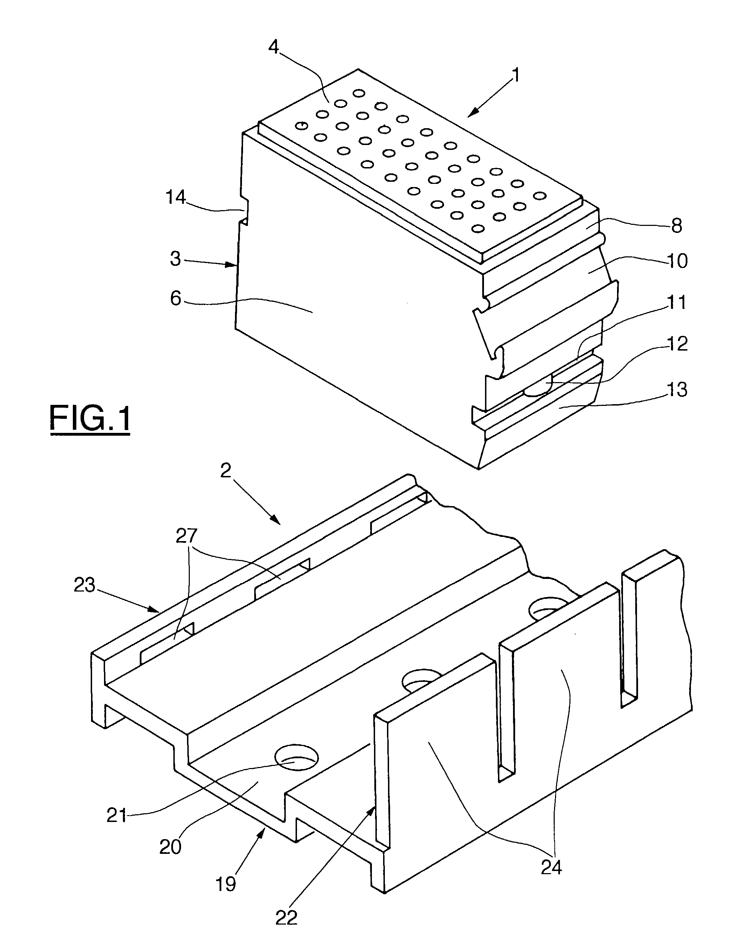

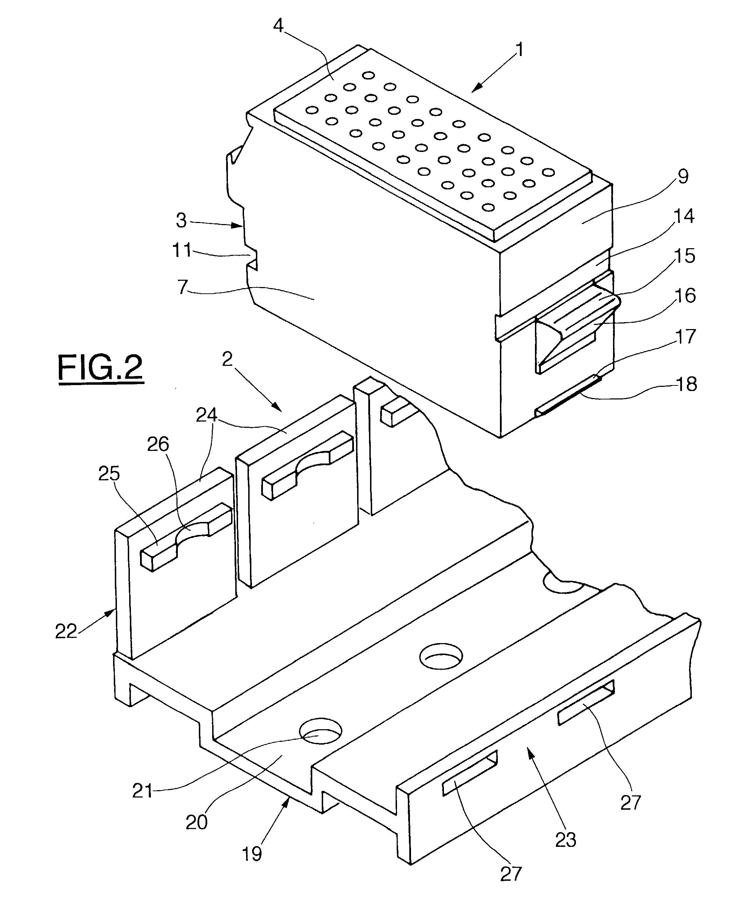

Selon les figures 1, 2 et 3, un module de raccordement électrique 1 est destiné à être monté par encliquetage sur un rail de support 2.

Le module de raccordement 1 dont la structure interne peut être de type connu en soi et ne relève pas de la présente invention, comprend un boîtier 3 de forme générale parallélépipédique, réalisé en une matière plastique rigide. Le boîtier 3 est fermé sur tous les côtés, sauf dans le haut (dessus) et reçoit ici un élément d'étanchéité 4 en matière élastique, muni de trous pour l'insertion d'embouts de raccordement fixés aux extrémités des conducteurs à interconnecter.

Le boîtier 3 présente, outre le dessus obturé par le l'élément d'étanchéité 4 et le fond ou dessous 5, deux grands côtés 6,7 plats, parallèles et deux petits côtés opposés sensiblement plats, à savoir un premier côté ou côté antérieur 8 et un second côté ou côté postérieur 9.

Sur le côté antérieur 8, le boîtier 3 est muni dans le haut d'un porte-étiquette 10 et dans le bas d'une rainure 11 horizontale subdivisée en deux tronçons de rainure par un bossage médian 12. Un chanfrein 13 est prévu à l'extrémité inférieure, en dessous de la rainure 11.

Sur le côté postérieur 9, le boîtier 3 comporte une rainure horizontale 14 et, en dessous de cette dernière, au milieu de sa largeur, un bossage 15 prolongé vers le base par une console 16.

Le module 1 tel que décrit jusqu'à présent correspond au module révélé par les documents DE-A-27 36 079 et FR-A-2 441 932.

En plus des caractéristiques relevant de l'état de la technique, le boîtier 3 du module 1 selon l'invention comporte, sur le côté postérieur 9, en dessous du bossage 15, presque au niveau du fond 5, une nervure 17 horizontale s'étendant en position médiane sur une partie de la largeur du côté 9. La nervure 17 comporte un chanfrein inférieur 18.

Le rail de support 2, destiné à recevoir côte à côte plusieurs modules 1, est réalisé en matière plastique, avec un profil général en U, asymétrique. Le fond 19 du rail 2, qui peut être plat ou, comme dans le mode de réalisation représenté, comporter une gouttière médiane 20 avec des trous de fixation 21 présente une première aile 22 ou aile antérieure plus haute et une seconde aile 23 ou aile postérieure moins haute.

L'aile antérieure 22 est subdivisée dans le sens de la longueur du rail 2, sur toute sa hauteur, en fonction de la largeur des modules 1 à fixer, en tronçons d'aile 24 séparés par des intervalles, de manière que les différents tronçons d'aile 24 soient indépendants. Sur sa face interne, chaque tronçon d'aile 24 porte une nervure horizontale 25 séparée en deux tronçons de nervure par une échancrure médiane 26.

L'aile postérieure 23 est continue sur toute la longueur du rail 2 et comporte, en regard des tronçons d'aile 24 de l'aile antérieure 22, des fenêtres 27 rectangulaires, horizontales, à proximité au-dessus du fond 19 du rail 2, la largeur des fenêtres 27, dans le sens de la longueur du rail 2, étant très légèrement supérieure à la longueur de la nervure 17 du boîtier 3 du module 1.

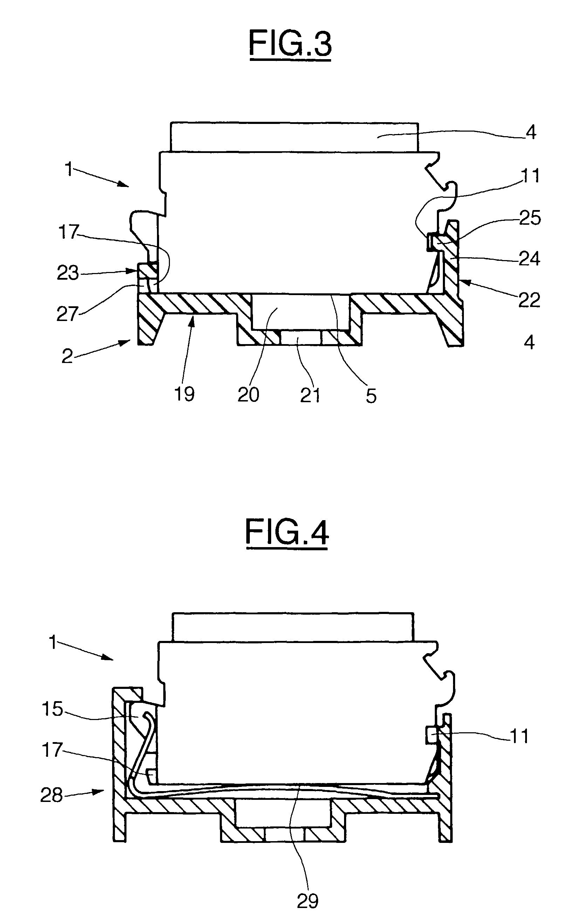

Pour encliqueter un module 1 sur le rail 2, on présente le module 1 au-dessus du rail 2, son fond 5 tourné vers le fond 19 du rail 2, le côté antérieur 8 au-dessus de l'aile antérieure 22 et le côté postérieur 9 au-dessus de l'aile postérieure 23. On engage ensuite dans un premier temps, soit la nervure 17 côté postérieur 9 du module 1 dans une fenêtre 27 de l'aile 23 du rail 2, soit la rainure 11 côté antérieur 8 du module 1 sur la nervure 25 d'un tronçon d'aile 24 de l'aile 22 du rail 2. Dans un second temps, on exerce une pression depuis le haut sur le côté opposé du module, ce qui permet, par flexion élastique vers l'extérieur du tronçon d'aile 24 correspondant du rail 2, l'encliquetage, soit de la rainure 11 du côté antérieur 8 du module 1 sur la nervure 25 de l'aile 22 du rail 2, soit de la nervure 17 du côté postérieur 9 du module 1 dans la fenêtre 27 de l'aile 23 du rail 2. Dans cette position qui est représentée sur la figure 3, le fond 5 du module 1 est appliquée sur le fond 19 du rail 2 et l'encliquetage du module 1 sur les deux ailes 22 et 23 du rail 2 assure le positionnement du module 1 sur le rail 2 aussi bien dans le sens de la longueur du rail 2 que transversalement, dans tous les sens.

Le même module 1 peut être fixé, comme le montre la figure 4, sur un rail de support 28, selon les documents DE-A-27 36 079 et FR-A-2 441 932, équipé d'un peigne de lames-ressort 29, le module 1 comportant tous les moyens nécessaires (rainure 11, bossages 15, console 16) pour coopérer avec le rail 28 et le peigne 29.

Le rail 2 peut être réalisé, en fonction de la plage de températures de fonctionnement de l'ensemble modules-rail, à partir de matières thermoplastiques chargées de fibres telles que par exemple poly(éther imide) PEI, poly(éther éther cétone) PEEK, polysulfone PSU, polyacétale, cristaux liquides polymères LCP.

## Revendications

1. Rail de support en U pour la fixation par encliquetage de modules de raccordement électrique de forme générale parallélépipédique comprenant sur deux côtés opposés (8, 9) des moyens d'accrochage susceptibles de coopérer élastiquement avec des moyens de retenue prévus sur le rail, caractérisé par le fait que le rail (2) est réalisé en matière thermoplastique, que l'une (22) de ses deux ailes (22, 23) est subdivisée en tronçons d'aile élémentaires séparés (24) correspondant chacun à un module (1) et comportant chacun sur sa face interne une nervure (25) subdivisée par une échancrure médiane (26) en deux tronçons de nervure espacés pour coopérer avec deux tronçons de rainure (11) séparés par un bossage médian (12) sur un côté (8) du module (1), et que l'autre aile (23) du rail (2) comporte, pour chaque module, une fenêtre (27) destinée à recevoir une nervure d'accrochage (17) prévue en position médiane sur l'autre côté (9) du module (1).

2. Module de raccordement électrique comprenant un boîtier de forme générale de forme parallélépipédique avec deux côtés opposés dont un premier côté ou côté antérieur (8) comporte une rainure (11) susceptible de coopérer avec un rebord interne d'une première aile ou aile antérieure d'un rail de support et dont le deuxième côté ou côté postérieur (9) comporte un bossage (15) susceptible de coopérer avec un rebord interne de l'autre aile ou aile postérieure du rail de support, caractérisé par le fait que pour permettre également la fixation par encliquetage du module (1) sur un rail de support (2) suivant la revendication 1, le module comporte en outre, sur son côté postérieur (9), en dessous dudit bossage (15), une nervure d'accrochage (17) susceptible de coopérer avec une fenêtre (27) de l'aile postérieure (23) du rail (2).

3. Module suivant la revendication 2, caractérisé par le fait que ladite nervure (17) comporte un chanfrein (18) sur le côté inférieur.

## Patentansprüche

1. U-förmige Tragschiene zur Schnappbefestigung von im wesentlichen parallelepipetförmigen elektrischen Anschlussmoduln, welche auf zwei gegenüber liegenden Seiten (8, 9) Einhängemittel aufweisen, die zum elastischen Zusammenwirken mit an der Schiene vorgesehenen Haltemitteln eingerichtet sind, dadurch gekennzeichnet, dass die Schiene (2) aus thermoplastischem Material hergestellt ist, dass einer (22) ihrer beiden Schenkel (22, 23) in voneinander getrennte Elementarabschnitte (24) unterteilt ist, von denen jeder einem Modul (1) entspricht und auf seiner Innenseite eine Rippe (25) aufweist, die durch eine mittlere Aussparung (26) in zwei voneinander beabstandete Rippenabschnitte unterteilt ist, welche mit zwei durch einen mittigen Vorsprung (12) voneinander getrennten Nutenabschnitten (11) auf einer Seite (8) des Moduls (1) zusammenwirken können und dass der andere Schenkel (23) der Schiene (2) für jedes Modul ein Fenster (27) aufweist, das zur Aufnahme einer in einer Mittellage auf der anderen Seite (9) des Moduls (1) vorhandenen Einhängerippe (17) bestimmt ist.

2. Elektrisches Anschlussmodul mit einem im Wesentlichen parallel epipetförmigen Gehäuse mit zwei einander gegenüber liegenden Seiten, von denen eine erste oder Vorderseite (8) eine zum Zusammenwirken mit einer innenliegenden Leiste eines ersten oder vorderen Schenkels einer Tragschiene bestimmte Nut (11) aufweist und dessen zweite oder hintere Seite (9) einen zum Zusammenwirken mit einer innenliegenden Leiste des anderen oder hinteren Schenkels der Tragschiene bestimmten Vorsprung (15) aufweist, dadurch gekennzeichnet, dass zur Ermöglichung auch einer Schnappbefestigung des Moduls (1) auf einer Tragschiene (2) gemäß dem Patentanspruch 1 das Modul außerdem auf seiner Hinterseite (9) unter dem erwähnten Vorsprung (5) eine Einhängerippe (17) aufweist, die zum Zusammenwirken mit einem Fenster (27) des hinteren Schenkels (23) der Schiene (2) eingerichtet ist.

3. Modul nach Anspruch 2, dadurch gekennzeichnet, dass die Rippe (17) auf ihrer Unterseite eine Anfasung (18) aufweist.

## Claims

1. U-section mounting rail for snap-mounting of electric connection modules of generally parallelepiped form having on two opposed faces (8,9) hook means designed to co-operate resiliently with retaining means provided on the rail, characterised by the fact that the rail (2) is made of thermoplastic material, that one (22) of its two flanges (22,23) is sub-divided into separate elementary flange sections (24) each corresponding to a module (1) and each having on its internal face a rib (25) sub-divided by a central notch (26) into two spaced rib sections for co-operating with two channel sections (11) separated by a central hump (12) on one face (8) of the module (1), and that the other flange (23) of the rail (2) has for each module, a window (27) designed to receive a hook rib (17) provided in a central position on the other face (9) of the module (1).

2. Electric connection module comprising a casing of generally parallelepiped shape with two opposed faces of which a first face or front face (8) has a channel (11) designed to co-operate with an internal lip on a first flange or front flange of a mounting rail and of which the second face or rear face (9) has a hump (15) designed to co-operate with an internal lip on the other flange or rear flange of the mounting rail, characterised by the fact that to permit equally well the snap-mounting of the module (1) on a mounting rail (2) according to claim 1, the module has in addition on its rear face (9) below the said hump (15) a hook rib (17) designed to co-operate with a window (27) in the rear flange (23) of the rail (2).

3. Module according to claim 2 characterised by the fact that the said rib (17) has a chamfer (18) on its underside.
